# EUROPEAN PATENT SPECIFICATION

(11) **EP 4 361 883 B1**
(45) Date of publication and mention of the grant of the patent: **25.06.2025**
(21) Application number: 22204315.0
(22) Date of filing: 28.10.2022
(51) Int. Cl.: G06K 17/00, G06Q 10/087, G06K 7/10, G01N 35/00

(54) **PROCESSING SYSTEM AND METHOD FOR PROCESSING CONSUMABLES**
VERARBEITUNGSSYSTEM UND VERFAHREN ZUR VERARBEITUNG VON VERBRAUCHSMATERIALIEN
SYSTÈME ET PROCÉDÉ DE TRAITEMENT DE CONSOMMABLES

(43) Date of publication of application: 01.05.2024
(73) Proprietor: Beckman Coulter, Inc., Brea, CA 92821 (US)
(72) Inventor: MUELLER, Thomas Martin, 83727 Schliersee (DE)
(74) Representative: Maiwald GmbH

(56) References cited:
- EP-A1- 3 626 652
- EP-A2- 2 437 069
- US-A1- 2017 087 555
- US-A1- 2017 254 825
- US-A1- 2022 274 075

## Description

The claimed invention relates to a processing system for processing consumables.

Processing systems can be a part of automatic analyzing systems that can comprise several modules, such as input modules, preparation modules, storage modules, processing modules, analyzing modules (relating to e.g. chemistry, hematology, or immunoassay), and output modules that can be connected by transport segments and are often used in environments like hospitals or laboratories to analyze a variety of samples, such as blood and fluid samples.

During processing and analyzation of samples several consumables (consumable laboratory articles) are used by the system. Examples of such articles are tips, caps, tubes, liquids, or reagents. A plurality or certain amount of these articles is stored in containers, such as racks, bottles, or boxes, which are certified and configured to be inserted and used with the processing systems. In conventional systems, the containers may contain identification means such as an RFID tag that can be used to verify that the container is certified and which sort of articles are contained therein.

Such systems can further process a great number of consumables together with other consumables and/or samples in various steps at an advanced speed. For a reliable automatization of processes, it is desirable that the system possesses certain identification information and status information about the container and the consumables, such as: information about the container (e.g. container identification and certification information), the type of consumables (e.g. tips, caps, fluid), the capacity of the container, the arrangement and the position of consumables in the container, and the filling-state of the consumables in the container.

For the processing of consumables, a set of information (e.g., container and consumables identification as well as initial consumables arrangement and position information) may be entered and stored within the system at an initial point. This can either be done by manually entering the information or using identification information stored on an RFID tag attached to the container, wherein for an identified container the system may store information relating to the respective arrangement and position information of the consumables. This information can be automatically logged within the system for a container which is processed in accordance with processing of the consumables by the system.

However, a system malfunction leading to a reboot, a loss of data, or the use of an already used container in a different system can lead to a deviation between the information that is identified or stored within the system and the actual state of the consumables in the container. Such deviations might lead to an improper use of a container, need to be identified and corrected elaborately, and/or might cause further malfunction or inefficiency within the analyzation and processing procedure. Furthermore, even in systems utilizing RFID tags, it is difficult to reliably prevent improper use of the containers, such as filling empty containers with already used consumables or uncertified 3^{rd} party consumables not fulfilling the required quality standards, particularly as the RFID tags may be tampered with. Such improper use can also lead to a system malfunction. In addition, for properly monitoring containers that have been (partially) used-up and are transferred to another processing system, the systems would have to be interconnected, leading to a complex architecture.

Further, document EP 2 437 069 A2 describes an analyzer which analyzes an analyte by using the analyte and consumables. The analyzer comprises an automatic reading device which reads a first product information related to a consumable via an identifier given to the consumable or a container containing the consumable. The analyzer further comprises a controller which permits an analysis operation when the first product information is suitable information read by the automatic reading device via the identifier, and prompts an operator to manually enter a second product information comprising information specifying the manufacturer or seller of the consumable when the automatic reading device cannot read the identifier or the information read via the identifier is not suitable as the first product information and permits the analysis operation and storage of the input second product information when the operator has entered the second product information.

Further, document US 2017/087555 A1 describes biological reagent carrier devices and methods, which employ RFID techniques to associate information with biological reagents.

Further, document EP 3 626 652 A1 describes a consumable management system comprising a consumable storage cluster with a plurality of storage compartments. Each storage compartment is configured to receive one or more consumables. The consumable management system further comprises storage compartment indicators to provide guidance to a user and detection means for validating user action(s). Further, document US 2017/254825 A1 describes an automated system and method for processing vessels containing biological samples. The system comprises vessel holders, a transport medium for transporting the vessel holders between the components of the system, a work cell for processing, a storage module for empty vessel holders, wherein the storage module is connected to the transport medium, a robotic manipulator for engaging and/or disengaging the vessels with empty vessel holders, an empty vessel holder transfer unit for introducing empty vessel holders into or retrieving them from the storage module, and an empty vessel holder detection unit, including an empty vessel holder detector for discriminating between filled and empty vessel holders as well as a transfer initiator configured to initiate the introduction or reintroduction of an empty vessel holder detected in or on the transport medium into the storage module by the empty vessel holder transfer unit.

US 2022/274075 A1 provides device for manufacturing a personalized product.

Accordingly, it is an object of the invention to provide a processing system and a method for processing consumables, which enable the identification of status information of consumables within a container in a simple and reliable manner.

The invention provides a processing system, automatic analyzing system, processing method, and use of an RFID tag according to the independent claims.

One aspect of the invention relates to a processing system for processing consumables, according to claim 1.

Advantageously, the processing system can reliably identify from the RFID tag of the container the current filling-status of the consumables, even after a reboot of the system or if the container is transferred to another system, by simply reading the RFID tag. Moreover, it can be reliably identified from the irreversibly modified RFID tag that a prohibition condition is met, which enables reliably preventing improper use of the container and/or the consumables contained therein, for example by presenting a notification, wherein the notification can be a warning, or restricting further processing in such a case. Particularly, since the RFID tag is irreversibly modified, it is no longer possible to further modify the RFID tag to bring it back to a state prior to the irreversible modification.

In the at least one RFID tag storage section, consumables status information indicative of a filling-status of the consumables arranged in the container are stored. In general, all information from which a filling-status can be derived (alone or in combination with information stored in the processing system) can be consumables status information indicative of a filling-status of the consumables. This enables advantageously the use of a RIFD tag with a simple and/or cheap RFID tag structure, since it is sufficient that not all filling-status information are stored on the RFID tag, but only a portion of the filling-status information or even only a portion of indicative information (such as compressed data or related information) which the system can process to derive a filling-status.

Examples of such consumables status information indicative of a filling-status of the consumables arranged in the container can be: a simple counter, which in combination with a total number of consumables (that can be stored in the system) can be used to derive a filling-status and, eventually, determine an empty state of the container; the before-mentioned simple counter, additionally in combination with a pre-defined sequence of removal positions (that can be stored in the system) can be used to determine a position-resolved filling-status (in other words it can be used to determine a next-removal-position and an empty state of the container).

Hereby, it is advantageously possible to derive the filling-status by using simple information. A storage of the information with which the consumables status information is combined in the system further enables a simple RFID tag structure.

It is also possible that no additional information stored in the processing system is required. In other words, all necessary information to derive a filling-status of the consumables arranged in the container can be stored on the RFID tag. By doing so, a more flexible and independent use of the containers with regard to a plurality of systems is possible, without requiring updates of the processing system.

Consumables status information can comprise or relate to: a number of articles (tips, caps, tubes) on a rack/in a box; a position (coordinates) of articles on a rack; a (remaining or removed) volume of liquids in a tube/bottle; a (remaining or removed) volume/quantity of reagents in a box/tube/bottle.

The consumables status information can additionally or alternatively be related to a removal of consumables arranged in the container, such that they can comprise or relate to: a removal of a number of consumables, from a position of the container; a removal of a volume/quantity of consumables; a time of a (first) removal; an initial filling-status, current filling-status, and/or filling-status thresholds; a number of removals (i.e. counter); a number of writing/updating operations. Depending on the type of containers, the type of consumables, and/or the system the consumables status information can be configured to comprise a combination of the above to enable a desired RFID tag structure and processing system structure. Therefore, the processing system can be variably configured according to external demands.

The system is configured to determine, based on the consumables status information read by the RFID reading unit, whether a predetermined prohibition condition is met after the removal of the part of the consumables from the container. The determination can be any type of determination that can be performed by the system or parts of the system, such as a controller or a cpu. For example, the determination can involve any one of: a calculation; a logical comparison of values, conditions, and/or thresholds; a prediction based on known values. It is decisive to determine whether the prohibition condition is or will be met after a removal of the part of consumables from the container. The timing of the determination can be before the actual removal or after the removal of the part of consumables from the container. The determination can be based on values on the RFID tag and within the processing system (or within a plurality of processing systems in case the container has been transferred to another processing system), wherein at least identification/classification information of the container and consumables which are stored on the RFID tag for connecting the RFID tag and system information are used, or it can be based only on information stored on the RFID tag.

Advantageously, the processing system can correlate a removal of the part of the consumables with the consumables status information to reliably determine that a predetermined prohibition condition is met. Therefore, a determination does not need to be based solely on information stored in the system. In addition, the system is able to connect a predetermined prohibition condition to a filling-status derived from the consumables status information.

The prohibition condition can be any condition in which a restriction of the use of the container may be beneficial. Further, the prohibition condition may be defined in the system and/or on the RFID tag, such that the prohibition condition may be defined by information stored in the system, by information stored on the RFID tag, or the system can be configured to define the prohibition condition from information in the system together with information on the RFID tag.

For example, it may be defined that the prohibition condition is met when (a section of) the container is empty, or when a certain number of removals or certain amount of removal has taken place, or a certain time has passed since the initial removal. Considering the time that has passed since the initial removal of consumables advantageously enables to consider a storage life/stability/durability of consumables from a break of a seal. The prohibition condition may be related to the filling-status of the consumables for conditions related to a removal.

Advantageously, the definition of the prohibition condition involving (a section of) the container being empty, or a certain number of removals or certain amount of removal having taken place, or a certain time having passed since the initial removal, enables individual definitions for different types of containers (depending on the variable most reasonable for the respective container), i.e. when a restriction of the use of said container may be beneficial.

An example for determining that the prohibition condition defined to be met in case of an "empty container" could be: an initial number X of consumables in a fresh/full container is known, the consumables status information is a number Y of consumables removed from the container, and after the removal of a certain amount of consumables such that Y = X-1, the system knows that after removal of the next consumable, the container will be empty and the prohibition condition is met.

Advantageously, a restriction of the use of the container can be based on the determination of prohibition conditions related to an empty state of the container or a section of the container by the system such that processing of an empty (section of the) container is restricted, particularly prohibited by the processing system.

It may also be defined that the prohibition condition is met based on considering a combination of an empty state, a number of removal and/or a certain time having passed since the initial removal. For example, the number of removal as well as the time since the first removal might both be involved into a beneficial restriction of further removal. Depending on the time that has passed since the first removal, the processing system may determine that the prohibition condition is met after the removal of the part of the consumables from the container, even if the container will not yet be empty after the removal. The processing system also may determine that the prohibition condition is met if the container will be empty after the removal if this occurs before reaching a certain time limit.

Also, further prohibition conditions may be defined in the system, which are met when it is determined that: the container comprises no RFID tag; the container comprises an erroneous/damaged RFID tag; a RFID tag with certain information registered within the processing system is read (e.g. "has been irregularly modified at some point").

The definition of further prohibition conditions enables that the system can determine a prohibition condition also for conditions in which a restriction of the use of the container may be beneficial which can occur independently of a removal of consumables from the container.

In addition, the processing system can also know or store multiple prohibition conditions, the RFID tag can know or store multiple prohibition conditions, or both the processing system and RFID tag can know or store multiple prohibition conditions. Also, multiple prohibition conditions can be defined based on a combination of the information stored on the RFID tag and within the processing system. Further, instructions for an assignment of prohibition conditions to a specific container or to specific consumables can be stored within the processing system and/or on the RFID tag. In particular, prohibition conditions can be defined for sections of a container, such that for each section of the container it can be determined whether a prohibition condition is met. For example it can be determined that a prohibition condition for a container section is met based on an indication that a section of the container is empty after removal of the part of consumables from the container. In particular, a section of a container can be a row or array of consumables holding positions or slots.

Advantageously, the processing system and/or RFID tag knowing multiple prohibition conditions enables that the processing system can determine that one of a plurality of predetermined prohibition conditions is met for an individual container and in particular individual sections of the container. Also, the system can assign multiple prohibition conditions to one container or a section of the container.

The prohibition condition(s) may be coded within system and/or on the RFID tag in a suitable manner.

The processing system is configured to irreversibly modify, when the prohibition condition is met, the RFID tag such that the processing system is able to identify from the RFID tag that the prohibition condition is met. Hereby, the system can be configured to irreversibly modify the RFID tag dependent on the prohibition condition, such that for different prohibition conditions known to the system the irreversible modification can be different for each prohibition condition. The irreversible modification can be performed by the RFID writing unit or by a RFID modification unit, wherein the RFID writing unit and the RFID modification unit may be completely or partially incorporated into one unit.

The irreversible modification of the RFID tag is a permanent modification of the RFID tag and can be a modification of the whole RFID tag, or only a certain portion of the RFID tag, in particular of the at least one RFID tag storage section.

Advantageously, the irreversible modification ensures that an irreversibly modified RFID tag or an irreversibly modified portion of the RFID tag cannot be modified to bring it back to a state prior to the irreversible modification. Therefore, the processing system will permanently be able to identify from an irreversibly modified RFID tag or an irreversibly modified portion of the RFID tag that the prohibition condition is met. This further enables that tampering with the RFID tag will also not restore a state, in which the processing system is not able to identify from the RFID tag that the prohibition condition is met.

The irreversible modification can be any deactivation of the RIFD tag or a portion of the RFID tag known in the art. The modification can be any one of: a deactivation by kill-command or partial kill-command; physical destruction via electrical destruction, irradiation, mechanical damage, chemical damage; removal of the RFID tag; complete or partial encryption; irreversible/permanent overwriting (e.g., flagging); deletion of (non-reproducible) processing keys on the RFID tag; or combinations thereof.

The processing system can be a system that can be integrated in different modules of an automatic analyzing system. It can be a system that receives containers with consumables directly from a user or from another system/module, in particular from another processing system or a module of the automatic analyzing system. The processing system can process consumables alone or can perform a pre-processing of consumables for further processing, in particular further processing in the automatic analyzing system. The processing system can also process consumables with other consumables to generate products, in particular products which are used by the automatic analyzing system. The processing system can also process consumables, in particular with samples, for analyzing samples.

Consumables can be articles used in e.g. automatic systems, in particular automatic analyzing systems. Examples for consumables can be: tips, for fluid uptake; caps and tubes for closed-tube production; other laboratory articles; liquids; reagents.

Examples for containers can be: racks for tips, tubes, caps, or other laboratory articles; tubes or bottles for liquids; boxes for loose reagents or laboratory articles; well plates.

An arrangement of consumables in a container can comprise: consumables (e.g. tips) being put in slots of a rack; consumables (e.g. fluid) being filled in a bottle; consumables (e.g. reagents, loose articles) being filled in a box or parts of a box (e.g. reagents, loose articles).

The RFID tag can store, in addition to consumables status information, container specific information such as a unique ID of the container, information specifying the type of container and/or the consumables, and/or information specifying the removal positions, removal coordinates and/or the removal sequence of the consumables. Also, container specific information can be stored in the at least one RFID tag storage section or in one or more separate, optionally non-overwritable, additional storage sections.

The RFID storage section can be a section of the RFID tag, either defined virtually by data or physically by RFID tag structure, and may be separate from other sections of the RFID tag.

The RFID reading unit can read data and information from a RFID tag, such as consumables status information. "Reading" the RFID tag may be understood to be performed by the RFID reading unit in the present application.

The RFID writing unit can write data and information on a RFID tag and can send data and information to the RFID tag. "Writing" on the RFID tag may be understood to be performed by the RFID writing unit in the present application.

The RFID reading unit and the RFID writing unit can be formed as a single RFID reading and writing unit or as separate units.

"Removing" from the container, if not described otherwise, may be understood to be performed by the removing unit in the present application. The removing unit can be: an arm with gripping equipment to pick up consumables (e.g. tips, caps, tubes) or a pipette that takes up fluid. The removing unit can additionally or alternatively be able to remove one or more consumables at a time or able to remove a pre-defined or requested amount/volume of fluid/reagents.

When it is determined that the prohibition condition is not met, e.g. consumables or fluid are left after removal, the consumables status information is updated according to the removal of consumables. Examples for an updating can be: an initial number of consumables is eight, one consumable is removed, and the updated number of consumables is seven; an initial counter indicates zero, one consumable is removed, and the updated counter indicates one, wherein the total number of consumables also is known to the system; an initial last-removal-position is B3, one consumable is removed from a position B4, and an updated last-removal-position is B4; an initial next-removal-position is B4, one consumable is removed from position B4, and an updated next-removal-position is B5, wherein the last-removal-position also is known to the system; an initial fluid volume is 5 ml, 2 ml are removed, and an updated fluid level is 3 ml; and initial removed-fluid-volume is 0 ml, 2 ml are removed, and an updated removed-fluid-volume is 2 ml, wherein the total volume of fluid is known to the system.

It is noted that updating the consumables status information may be performed upon each removal of a consumable or upon removal of a certain number or amount of consumables. Here, "updating upon removal" is to be understood that the updating may be performed after the respective removal has taken place, or before a respective pending or initiated removal. In other words, the processing system may be configured such that a certain amount (e.g. multiple consumables) as a part of the consumables are removed simultaneously or sequentially. For a sequential removal of a certain amount of consumables, the processing system can be configured such that the processing system updates the consumables status information or irreversibly modifies the RFID tag only after the total certain amount of the consumables has been removed (i.e. all individual removal actions have been performed). The processing system can also be configured such that, for a sequential removal, after each individual removal action, in particular each individual removal action before a final individual removal action of the last consumable of the multiple consumables, the consumables status information on the RFID tag are updated. It is further noted that in case it is determined that the prohibition condition is met, the system can be configured to update the consumables status information before the irreversible modification.

Advantageously, the update of the consumables status information after each individual removal action of a sequential removal enables that for the case the system unintentionally stops during the removal (e.g. due to a malfunction), the updated consumable status information are still stored on the RFID tag.

Actual information, particularly data, stored and/or updated on the RFID tag can depend on additional information stored within the system and/or on the RFID tag. Advantageously, this enables to keep the amount of data stored on the RFID as small as possible, resulting in simpler or cheaper RFID tags.

The identification by the processing system, that the prohibition condition is met, can be performed by the system or parts of the system, such as a controller or a cpu by means of the RFID reading unit or an RFID identification unit, wherein preferably the RFID reading unit and the RFID identification unit are completely or partially incorporated into one unit.

The identification can comprise that: a section of or the entire RFID cannot be read; the respective RFID storage section cannot be read; the RFID tag contains information specifying that the prohibition condition is met, and optionally which prohibition condition is met (for example which sections of the container are empty for defined prohibition conditions for each section of the container).

In the processing system the consumables status information is indicative of a position of a part of the consumables within the container to be removed next, and the processing system is configured to remove the part of the consumables from the position of the container indicated in the consumables status information.

Advantageously, the processing system can reliably identify from the RFID tag of the container the position of the part of the consumables within the container to be removed next by simply reading the RFID tag. Accordingly, the system can operate with high efficiency, since consumables can reliably be removed directly from the correct intended next position even if the system is shut down and restarted or if the container is transferred to a different system, without having to check empty positions until a filled position is found.

The consumables status information is indicative of a position of a part of the consumables within the container to be removed next. In general, all information from which a position for the next removal of the part of consumables from the container can be derived (alone or in combination with information in the processing system) can be consumables status information indicative of a position of a part of the consumables within the container to be removed next. In other words, the position of a part of the consumables within the container to be removed next can be derived with or without additional information stored in the system. The position can be indicated by, e.g: a simple counter (such as the number of removals); a position information (such as "slot B4 of a rack"); or exact coordinates within the container. For multiple consumables being removed at the same time, the position for the next removal of the part of consumables from the container can also be multiple positions of the multiple consumables, respectively.

The part of the consumables to be removed next is the part of the consumables which will be removed with the next removal, such as one tube or multiple tubes in a row or a cap in a slot, for example. A removal from an indicated position is, in other words, a removal from the position that is derived from consumables status information.

The processing system can further be configured to provide a notification and/or to restrict the removal of consumables from the container if it is identified or determined that the prohibition condition is met.

In particular, the processing system can be configured to provide a notification, in particular a warning, and/or to restrict the removal of consumables from the container if it is identified upon reading a RFID tag of a newly received container that the prohibition condition is met. Alternatively, or in addition the prohibition system can be configured to provide a notification, in particular a warning, and/or to restrict the removal of consumables from the container if it is determined that the prohibition condition is met for a container from which the part of the consumables is removed.

The processing system can also be configured to determine that the prohibition condition is met for a newly received container, e.g. a container which has not yet been irreversibly modified, but wherein from its consumables status information it can be determined that the prohibition condition is met. For this case, the processing system can further be configured to immediately irreversibly modify the RFID tag of the newly received container without an attempt to remove a part of the consumables from the newly received container.

Advantageously, a notification, in particular a warning, can warn a user of the processing system that prohibition condition is met such that the user can pay caution and, if necessary, take actions such as the replacement of a container. The restriction of the removal of consumables enables that an already empty container or section of a container are no longer accessed wherein the efficiency of the system is thereby increased. Further, an emptied container or section of a container cannot be refilled with uncertified or wrong consumables and re-used, such that the risk of a malfunction of the processing system due to insertion of uncertified or wrong consumables is reduced.

A notification, in particular a warning, optionally an individual warning, can be provided for any prohibition condition, wherein a notification can be provided as: a notification sound; an optical notification signal; or a combination thereof. An example of a notification could be a text "container empty", or "container misuse detected" provided to the user. The notification can be provided in any way known in the art, such as on a display with speakers that can be part of the processing system or the automatic analyzing system.

The processing system can be configured to restrict the removal of consumables from the container. In other words, the system can be configured to partially or completely prohibit the removal of consumables from the container or to prohibit the removal of consumables from one of a plurality of sections of the container.

An example for a prohibition of removal subsequent to an irreversible modification can be that position information of the consumables was stored in the at least one RFID tag storage section and after the irreversible modification the position information can no longer be read, such that articles from this position cannot be removed.

Another example can be that information for a next removal was stored in the at least one RFID tag storage section and after the irreversible modification the information can no longer be read, wherein the processing system can be configured to not remove articles, when no information indicating a next removal can be read from the at least one RFID tag storage section.

The processing system can further be configured to irreversibly modify the RFID tag by irreversibly modifying the at least one RFID tag storage section.

Advantageously, the above configuration enables the use of a simple / cheap RFID tag, since the at least one RFID tag storage section can be used for storing and providing the consumables status information, and at the same time for irreversibly modifying the RFID tag so that the identification of the prohibition condition being met is enabled.

The irreversible modification of the at least one RFID tag storage section can be: a deactivation by kill-command or partial kill-command; a physical destruction via electrical destruction, irradiation, mechanical damage, or chemical damage; an irreversible/permanent overwriting; or a deletion of a (non-reproducible) processing key on the tag which is needed to process information from the at least one RFID tag storage section.

In the processing system the irreversibly modifying can include at least one of: deactivation, encryption, physical destruction, or permanent overwriting.

Advantageously, an irreversible modification including one of deactivation, encryption, or permanent overwriting enables that an irreversible modification can be performed by simple means such as the RFID writing unit. The physical destruction can be performed by simple destruction equipment without the need for a data-based interaction with the RFID tag.

In the processing system the information required for determining whether the prohibition condition is met can be at least partially stored on the RFID tag.

Advantageously, this enables that new prohibition conditions (functions) can be added to the processing system without having to update the processing system.

The information stored on the RFID tag can be stored in the RFID tag storage section or another section of the RFID tag. The information can include information on consumables number, consumables position, consumables amount, sequence of removal, and/or storage life of consumables in the container.

The determination whether the prohibition condition is met can be at least partially, optionally completely, be based on information on the RFID tag. In particular the determination can be based on consumables status information, thresholds, and/or identification and classification information. In case the information is partially stored on the RFID tag, some information, for example thresholds, can be stored in the processing system, wherein a connection between information in the processing system and information on the RFID tag is possible using the identification and classification information.

In the processing system the RFID tag can comprise a plurality of RFID tag storage sections, and each of the plurality of RFID tag storage sections can be configured to store consumables status information corresponding to container sections in which the consumables are arranged, respectively.

Advantageously, a plurality of RFID tag storage sections storing consumables status information corresponding to container sections enables a storage-wise separation of consumables status information and, therefore, a simpler irreversible modification of the RFID tag when it is determined that a prohibition condition for a corresponding container section is met after removal.

The plurality of RFID tag storage sections are sections of the RFID tag (either defined virtually by data or physically by RFID tag structure) and can be separate from other sections of the RFID tag. Each section can be configured to store consumables status information related or corresponding to a respective container section.

The container can comprise multiple sections and the container sections are sections of the container. Examples of such container sections can be: a row or array of slots; a single slot; multiple slots; or a section of a box.

The consumables status information of consumables arranged in a container section can be stored in a corresponding RFID tag storage section. In particular, one RFID tag storage section can also store consumables status information of multiple container sections.

In an example, the container can be a rack and has four rows and the RFID tag has three RFID tag storage sections, wherein the consumables status information of the consumables in row one may be stored in RFID tag storage section one, the consumables status information of the consumables in row two may be stored in RFID tag storage section two, and the consumables status information of the consumables in rows three and four may be stored in RFID tag storage section three.

In the processing system, a prohibition condition can be defined for each of the container sections, respectively, the prohibition condition can be defined as an empty state of the respective container section, a removal sequence can be defined for the container sections, and the processing system can be configured to perform the removal of consumables from a next container section defined in the removal sequence when the RFID tag storage section corresponding to the previous container section has been irreversibly modified.

Advantageously, misuse of a container or container section can be reliably prevented. For example, it can be prevented that the processing system processes refilled consumables that have been refilled in emptied container sections. Such refilled consumables may be already used consumables, (uncertified) consumables of unknown origin, or consumables not in accordance with the indicated consumables from the RFID tag, all potentially leading to malfunction of the processing system and/or the automatic analyzing system.

The prohibition condition can be defined as an empty state of the respective container section, or in other words, it can be defined that the processing system determines that the prohibition condition is met for the respective container section, when the processing system determines that the respective container section is or will be empty after the next removal.

Each container section or RFID tag storage section can have a different prohibition condition, namely that when the respective container section corresponding to the RFID tag storage section is empty, the respective prohibition condition is met. The system can be configured that when a last container section is empty and the corresponding last RFID tag storage section has been irreversibly modified, the system is prohibited from removing further consumables and/or issues a notification to the user.

The removal sequence can be a sequence used for the removal procedure. Examples for such a sequence can be: from which positions, particularly coordinates, consumables are removed in sequence; for which slot-numbers articles are removed in sequence; which container section is emptied at which point; from which container section consumables are removed first and subsequently. If a container section comprises multiple slots, the removal sequence can include a sequence of slots for the respective container section and slots.

The removal sequence can be stored within the processing system, on the RFID tag, or derived from information stored within the processing system and on the RFID tag.

One example for a processing system processing consumables arranged in a container as specified above could be as follows:
The container is a rack with three times four slots arranged in a matrix-like pattern. The first row contains the slots A1 to A4, the second row contains the slots B1 to B4, and the third row contains the slots C1 to C4, wherein each row is one container section of the rack. In each slot of the container sections, a tube is arranged. The RFID tag contains a first, a second, and a third RFID tag storage section corresponding to the three container sections A, B and C, respectively. From the RFID tag, the system also reads identification information such that the system can identify the container (i.e. a rack with three times four slots). For each of the container sections, a prohibition condition is defined which is met when the respective container section is empty, i.e. when all slots of the respective container section are empty. Each RFID tag storage section stores the position information of a tube to be removed next (i.e. next-removal-position) from the corresponding container section (e.g. the first RFID tag storage section stores the position A1 before an initial removal of a tube from the rack). A removal sequence is defined, according to which the system is configured to remove the tubes from the sections in ascending order and in accordance with the next-removal-position stored within the respective RFID tag storage section. According to the defined removal sequence, the processing system starts to remove the tube from position/slot A1. Since the system determines that after the removal the prohibition condition of the first container section is not met, i.e. the first container section is not empty, the system updates the next-removal-position in the first RFID tag storage section to A2. The system proceeds to remove tubes from the container section until only the tube in slot A4 is left and the next-removal-position stored in the first RFID tag storage section has been updated to A4. Upon the next removal, the system has determined that after the removal the first container section is empty such that the prohibition condition is met, wherefore the system irreversibly modifies the RFID tag using a partial-kill command, such that the first RFID tag storage section is deactivated. According to the defined removal sequence, the next removal will be performed from the second container section, wherein the second RFID tag storage section indicates B1 as a next-removal-position. Further, the system is configured such that any further removal from a container section corresponding to a deactivated RFID tag storage section is prohibited. The system then proceeds to empty the second and third container sections and to deactivate the second and third RFID tag storage sections, eventually, when it is determined that the respective container sections are empty after removal of a tube from the respective container sections.

Advantageously, a container section corresponding to deactivated RFID tag storge sections can no longer be accessed for removal. Therefore, in case of a reboot of the system and the removal sequence starting anew, the system would not try to remove tubes from an already emptied section and therefore the efficiency is increased. Additionally, a potential refill of uncertified tubes or wrong tubes in a container section corresponding to a deactivated RFID tag storage section will not lead to a removal of these tubes, therefore reducing the risk of malfunction or inefficiency.

Another example for a processing system processing consumables arranged in a container as specified above could be as follows:
The container is a rack with one row of 10 slots. In each slot, a tip is arranged. The RFID tag contains a RFID tag storage section which stores a counter indicating the number of removals which indicates "0" before an initial removal of a tip. A prohibition condition is defined which is met when the rack is empty. The processing system removes a first tip from the rack and determines that after the removal the prohibition condition is not met. Therefore, the processing system updates the counter to indicate "1". The processing system proceeds to remove tips from the rack until only one tip is left and the counter indicates "9". Upon the next removal, the processing system determines that the prohibition condition will be met after the next removal and irreversibly modifies the RFID tag by physically destroying it.

Another example relates to a processing system for processing consumables, comprising: a container in which the consumables are arranged, the container comprising an RFID tag with at least one RFID tag storage section for storing consumables status information indicative of a position of a part of the consumables within the container to be removed next; an RFID reading unit configured to read information from the RFID tag; an RFID writing unit configured to write information on the RFID tag; and a removing unit configured to remove a part of the consumables from the container; wherein the processing system is configured to: read, by means of the RFID reading unit, the consumables status information from the at least one RFID tag storage section, remove, by means of the removing unit, the part of the consumables from the position of the container indicated in the consumables status information, update, by means of the RFID writing unit, the consumables status information in the at least one RFID tag storage section.

Advantageously, the processing system can reliably identify from the RFID tag of the container the position of the part of the consumables within the container to be removed next by simply reading the RFID tag. Accordingly, the system can operate with high efficiency, since consumables can reliably be removed from the correct intended next position even if the system is shut down and restarted or if the container is transferred to a different system.

The definitions and explanations relating to the previous aspect apply correspondingly.

The consumables status information is indicative of a position of a part of the consumables within the container to be removed next. In general, all information from which a position for the next removal of the part of consumables from the container can be derived, alone or in combination with information in the processing system, can be consumables status information indicative of a position of a part of the consumables within the container to be removed next. In other words, the position of a part of the consumables within the container to be removed next can be derived with or without additional information stored in the system. The position can be indicated by: a simple counter (such as the number of removals); a position information (such as slot B4 of a rack); or exact coordinates within the container. For multiple consumables being removed at the same time, the position for the next removal of the part of consumables from the container can also be multiple positions of the multiple consumables, respectively.

The part of the consumables to be removed next is the part of the consumables which will be removed with the next removal, such as one tube or multiple tubes in a row or a cap in a slot.

A removal from an indicated position is, in other words, a removal from the position that is derived from consumables status information.

One example for a processing system processing consumables arranged in a container as specified by this aspect could be as follows:
The container is a rack with three times four slots arranged in a matrix-like pattern. The first row contains the slots A1 to A4, the second row contains the slots B1 to B4, and the third row contains the slots C1 to C4. In each slot a tube is arranged. The RFID tag contains a RFID tag storage section. From the RFID tag, the system also reads identification information such that the system can identify the container (i.e. a rack with three times four slots). The RFID tag storage section contains consumables status information indicative of a position of a tube within the rack to be removed next (i.e. next-removal-position). Before an initial removal, the consumables status information indicates A1 as a next-removal-position. The system removes the tubes step by step and with each removal updates the consumables status information to indicate the next-removal-position for a subsequent removal. When the processing (for example due to a processing system malfunction) is stopped at a certain stored next-removal-position (e.g. B3) being indicated and the rack can be removed from the processing system to be transferred to another processing system. Upon receiving the new rack and starting the processing of the rack, the another processing system will not start to remove tubes from already emptied slots (e.g. A1), but will start to remove the tube from the indicated next-removal-position.

Advantageously, the processing systems do not need to be interconnected to enable that the other processing system starts at the indicated next-removal-position and not at already emptied slots. Therefore, the efficiency of the processing is increased. Further, should the emptied slots have been refilled with uncertified or wrong tubes during transfer, the other processing system will still start at the indicated next-removal-position, not removing and processing the refilled tubes. Therefore, the risk of potential malfunction or inefficiency due processing of uncertified or wrong consumables can be reduced.

In the processing system according to the above aspects, the consumables can be any of sample tubes, sample tube caps, pipetting tips and liquids, and/or the container can be any of a rack, a well plate and a bottle.

In particular, the consumables can be secondary consumables which are consumables to be used with samples or sample products. In other words, secondary consumables are consumables which can be used in a secondary processing step in which the consumables can be used to store or transfer a portion of a sample or a sample product. The sample may be contained in a primary tube. Examples for secondary consumables can be: secondary tubes; secondary tips, secondary tube caps.

Advantageously, the use of secondary consumables enables that, when the processing involves the processing of consumables with samples, only portions of a sample or sample products can be used and processed and not the complete sample or sample product.

Another aspect of the invention relates to an automatic analyzing system comprising: at least one input module comprising a processing system according to any of the preceding claims, and at least one analyzing module.

The definitions under the previous aspects are also applicable for this aspect.

The automatic analyzing system can be a system with several modules, such as input modules, processing modules, analyzing modules, and/or output modules. The processing system can be contained within an input module, or within a processing module.

The input module can be a module for receiving containers with consumables and optionally samples and can optionally be configured for pre-processing of the consumables arranged in the containers.

The analyzing module can be any module which analyses samples. It can further be configured to use consumables. Examples for an analyzing module can be: a hematology module, a chemistry module, or an immunoassay module.

Another aspect of the invention relates to a processing method for processing consumables, according to claim 10.

The definitions and explanations relating to the previous aspects apply correspondingly.

The processing method can be performed by an above-specified processing system.

Another example relates to a processing method for processing consumables, the consumables being arranged in a container, the container comprising an RFID tag with at least one RFID tag storage section for storing consumables status information indicative of a position of a part of the consumables within the container to be removed next, wherein the processing method comprises:
an RFID reading step of reading the consumables status information from the at least one RFID tag storage section; a removal step of removing the part of the consumables from the position of the container indicated in the consumables status information; and an updating step of updating the consumables status information in the at least one RFID tag storage section.

The definitions and explanations relating to the previous aspects apply correspondingly.

The processing method can be performed by an above-specified processing system.

Another aspect of the invention relates to an use of an RFID tag in a processing system for processing consumables according to any of the above-specified processing systems, wherein the RFID tag comprises at least one RFID tag storage section for storing consumables status information, wherein the consumables status information is indicative of a position of a part of consumables within the container to be removed next and optionally of a filling-status of consumables arranged in the container.

The definitions and explanations relating to the previous aspects apply correspondingly.

In the following, possible examples of the present invention will be described with reference to the appended drawings. It is to be understood that the present invention is not limited to the examples described, the present invention is limited by the scope of the appended claims.
Figure 1 shows an example of an input module comprising a processing system.
Figure 2 shows the example of an input module comprising a processing system of Figure 1 in a different state.
Figure 3 shows an example of an automatic analyzing system comprising an input module and an analyzing module.
Figure 4 shows a diagram of an example of a processing method for processing consumables.
Figure 5 shows a diagram of another example of a processing method for processing consumables.
Figure 6 shows an example of a container in which consumables are arranged.
Figure 7 shows the example of a container in which consumables are arranged of Figure 6 from a different perspective.
Figure 8 shows another example of a container in which consumables are arranged.

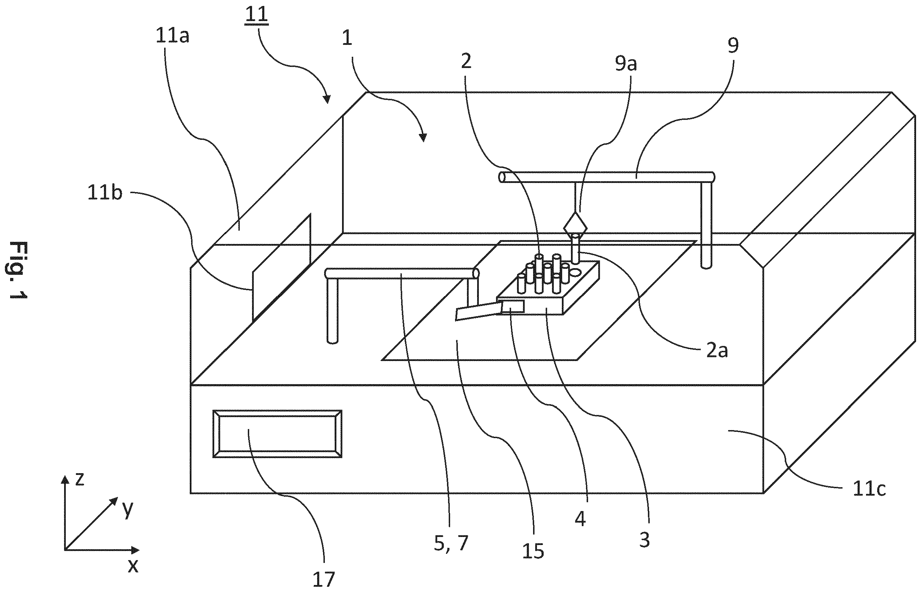

In Figure 1 an input module 11 is shown, which comprises an input module housing 11a with an input module access door 11b which is located in a side of the input module housing in negative x-direction. The input module housing 11a is configured to contain a processing system 1 inside of the input module and prohibit physical interaction with parts of the processing system 1 from outside the input module 11 (e.g. by a user). Below the input module housing 11a (that is, in negative z-direction) there is an input module main body 11c, in which parts of the input module and also parts of the processing system 1 can be stored (such as a controller or cpu, or further units of the processing system for controlling a processing of consumables 2). A processing space is formed above the input module main body 11c, inside of the input module housing 11a The input module housing 11a can further be configured to prevent contamination of the objects stored inside the processing space (e.g., consumables 2, samples, the processing system 1 with its units). Through the input module access door 11b a container 3 in which consumables 2 are arranged can be entered into the input module (e.g., by a user). The container 3 is placed on a container placing section 15, on which the consumables 2 are processed. The container placing section forms an area in the x-y-plane on top of the input module main body 11c.

Via a control panel 17 on the front of the input module main body 11c in y-direction, a user can initiate a processing of the consumables 2. Therefor the control panel 17 can comprise certain control equipment such as buttons, a keyboard, and/or a (optionally touch-sensitive) display. Alternatively, the processing can be initiated automatically by the processing system 1 upon receiving the container 3.

The processing system 1 reads information, in particular consumables status information, from the RFID tag 4 using a RFID reading and writing unit 5, 7, which is formed by a RFID reading unit 5 together with a RFID writing unit 7. The RFID reading and writing unit 5, 7 is positioned on top of the input module main body 11c, inside of the processing space. The RFID reading and writing unit 5, 7 is formed as a movable unit with an arm and certain reading and writing equipment and is configured to approach the RFID tag 4 on the container 3 in order to read from and write on the RFID tag 4.

Although the RFID reading and writing unit 5, 7 is depicted in Figure 1 as a movable unit with an arm, the RFID reading and writing unit 5, 7 (or the individual the RFID reading unit 5 and the RFID writing unit 7) can be integrated into or below the container placing section 15 as a fixed unit. Placing the container 3 on the container placing section 15 enables, that the RFID reading and writing unit 5, 7, when being integrated into or below the container placing section 15, is able to read from and write on the RFID tag 4.

The processing system 1 identifies from the information read from the RFID tag the type of the container 3 as a rack 3 and the type of the consumables 2 as tubes 2, as well as three times three matrix-like structure in which the tubes 2 are arranged in the rack 3. The tubes 2 extend from the rack 3 in z-direction.

According to a removal sequence, the processing system 1 starts removing a first tube 2 from the rack 3 from above (in z-direction), using a removing unit 9 with a gripping equipment 9a, configured to selectively remove a certain tube 2a as a part 2a of the tubes 2 from the rack 3. The removing unit 9 as positioned on top of the input module main body 11c, inside the processing space. It is formed as a movable unit with an arm, to which the gripping equipment 9a is attached.

A prohibition condition for the rack 3 is defined within the processing system 1 based on the information read from the rack 3. It is defined that the prohibition condition is met when the rack 3 reaches an empty state.

The processing system 1 determines whether the predetermined prohibition condition for the rack 3 is met after the removal, wherein the processing system 1 determines that the predetermined prohibition condition is met when after the removal of the certain tube 2a, the rack 3 is empty.

Since the certain tube 2a is the first tube which is removed from the container, the processing system 1 determines that the prohibition condition is not met. Therefore, the processing system 1 updates the consumables status information on the RFID tag 4, in particular in a RFID tag storage section of the RFID tag 4.

The updating of the consumables status information involves the updating of a counter, counting the times of removals from the rack 3. Accordingly, the processing system updates the counter on the RFID tag 4 to indicate "1".

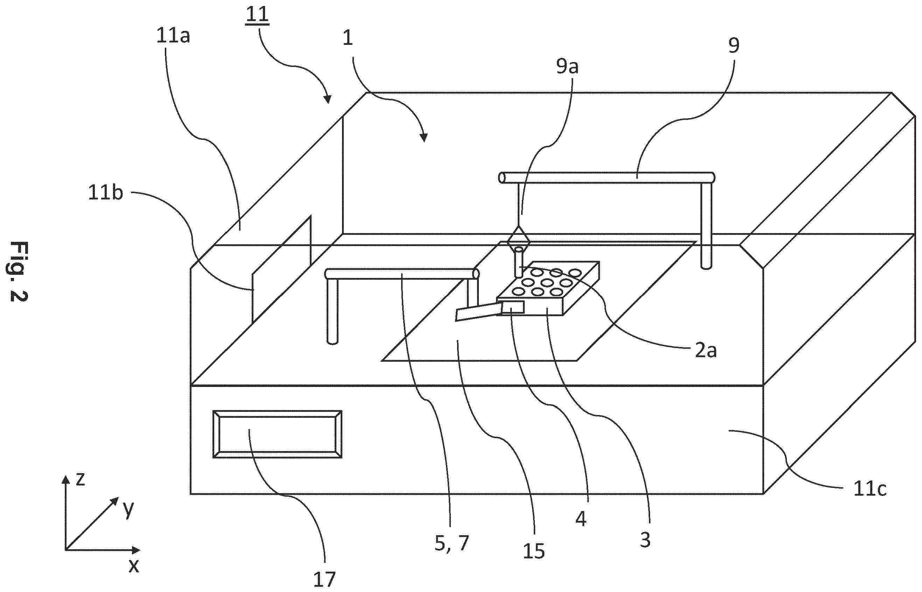

Figure 2 shows the input module 11 from Figure 1 at a later stage. The removing unit 9 removes the certain tube 2a, which is the last tube, from the rack 3. Upon the removal of the last tube from the rack 3, the processing system determines, based on the consumables status information, that the rack 3 has reached an empty state, wherefore the predetermined prohibition condition is met.

Using the RFID reading and writing unit 5, 7, the processing system 1 irreversibly modifies the RFID tag 4 of the rack 3 by sending a kill-command to the RFID tag. Therefore, the RFID tag 4 becomes permanently deactivated.

The processing system 1 is able to identify from the RFID tag 4 that the prohibition condition is met, i.e. it is able to recognize that the RIFD tag 4 has been permanently deactivated. Since the processing system 1 is configured to prohibit further removal from a rack 3, from which it has been determined that the prohibition condition is met, the processing system 1 will not process the rack 3 any further. Via the control panel 17, the processing system 1 can provide a notification, in particular a warning, that the prohibition condition is met and the rack 3 has reached an empty state.

A user might remove the rack 3 from the input module 11 and refill it with uncertified tubes, or wrong tubes (i.e. tubes which are of different type compared to the type of tubes 2 indicated by the RFID tag 4) and insert it into the input module 11 again. In this case, the processing system 1 will not process the refilled tubes from the rack 3 since the RFID tag 4 has been permanently deactivated. The user can also not bring the RFID tag 4 back into a state before the irreversibly modification, i.e. in an activated state.

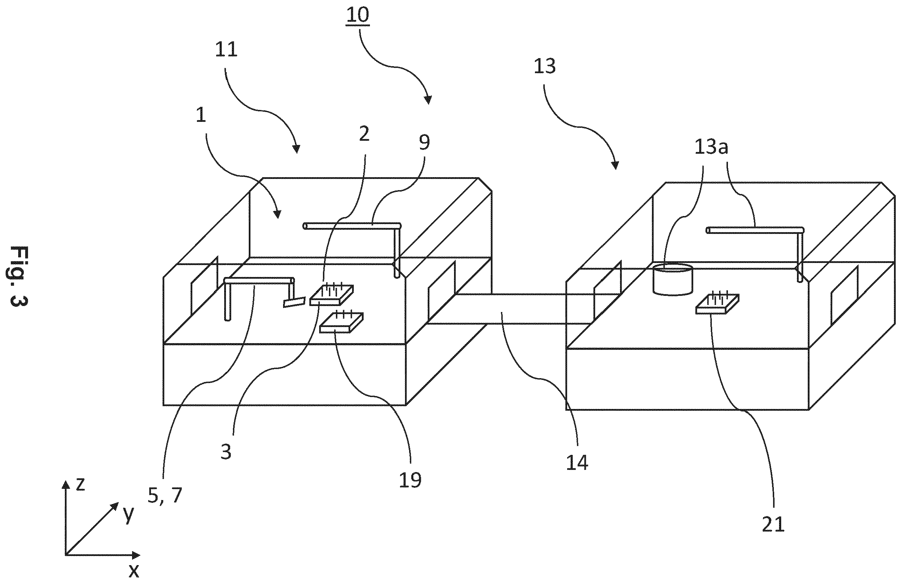

Figure 3 shows an example of an automatic analyzing system 10 comprising an input module 11 and an analyzing module 13. The analyzing module 13 is positioned away from the input module 11 in x-direction.

The input module 11 has a similar structure as the input module 11 shown in Figure 1 and comprises a processing system 1 with RFID tag reading and writing unit 5, 7, a removing unit 9, and a container 3 with consumables 2. The input module 11 further comprises samples 19 in the processing space of the input module 11, wherein the processing system 1 processes the consumables 2 together with the samples 19.

The consumables 2 are secondary tubes 2, which are processed together with the samples 19, wherein a portion of the samples 19 is transferred to individual tubes 2 during the processing to prepare processed consumables 21. The transfer is performed by a (not shown) transfer unit. Alternatively, the removing unit 9 can be configured to perform a processing of the consumables, which may include processing with samples, wherein the processing can produce processed consumables 21 for further analysis.

Although the processed consumables 21 are prepared by processing consumables 2 with samples 19, the processing system 1 can also be configured to prepare other processed consumables by processing consumables with other consumables.

The input module 11 and the analyzing module 13 are connected via a transport segment 14, wherein the automatic analyzing system 10 is configured to automatically transport consumables 2, processed consumables 21, and/or samples 19 from one module to another module, in particular from the input module 11 to the analyzing module 13.

Within the analyzing module 13, analysis of the processed consumables 21 is performed using analyzing equipment 13a. Depending on the type of analysis (e.g. chemistry, hematology, or immunoassay) the analyzing equipment 13a can comprise specific further equipment used for the respective type of analysis.

Although in Figure 3 the input module 11 and the analyzing module 13 are shown as two separate modules connected via the transport segment 14, the input module 11 and analyzing module 13 can also be formed as one combined module without transport segment 14. In other words, the automatic analyzing system 10 can be formed such that one module combines the input module 11 and analyzing module 13, wherein the modules 11, 13 share the same space for processing and analyzing.

Although not shown in Figure 3, the automatic analyzing system can comprise further modules such as further input modules, preparation modules, storage modules, processing modules, further analyzing modules (relating to e.g. chemistry, hematology, or immunoassay), and output modules. These modules can be either formed separately and connected via transport segments 14, or they can also be form as combined modules without transport segments 14. Each of these modules can be configured to contain a processing system 1.

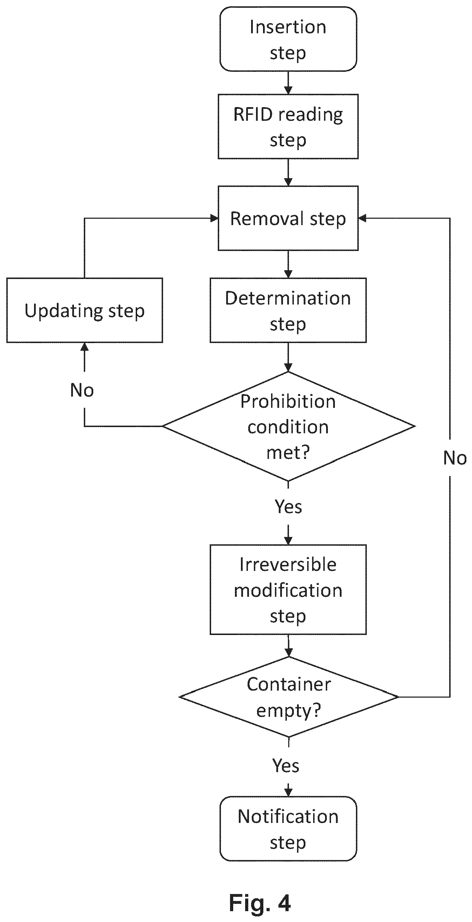

In Figure 4 a diagram of an example of a processing method for processing consumables 2 is shown wherein the processing method is performed by a processing system 1. The method begins with an insertion step, in which an operator puts a container 3 in which consumables 2 are arranged into the processing system 1.

Subsequent, in a RFID reading step, the processing system 1 reads the consumables status information from the RFID tag 4 and determines a filling-status of the consumables 2 in the container 3 based on the consumables status information.

In a removal step, the system removes a part 2a of the consumables 2 from the container 3.

Subsequent to the removal step, in a determination step, the processing system 1 determines based on the consumables status information read from the RFID tag storage section, whether a predetermined prohibition condition is met after the removal.

In case the prohibition condition is not met, in an updating step, the processing system 1 updates the consumables status information on the RFID tag 4.

After the updating step, the processing system 1 continues with removing another part 2a of the consumables 2 from the container 3 in another removal step.

In case the prohibition condition is met, in an irreversible modification step, the processing system 1 irreversibly modifies the RFID tag 4 such that from the RFID tag 4 it can be identified that the prohibition condition is met.

After the irreversible modification step, the processing system 1 determines whether the container 3 is empty or not. The processing system 1 knows from the information read from the RFID tag 4, whether there are several container sections 3a in the container 3.

In case there are several container sections 3a, and the prohibition condition was met for only one of the container sections 3a, wherein another container section 3a is still full or still contains consumables, the processing system 1 continues with removing another part 2a of the consumables 2 from the container 3 in another removal step.

When it is determined that the container 3 is empty, in a notification step, the user is notified that the container 3 is empty and can be removed from the processing system 1.

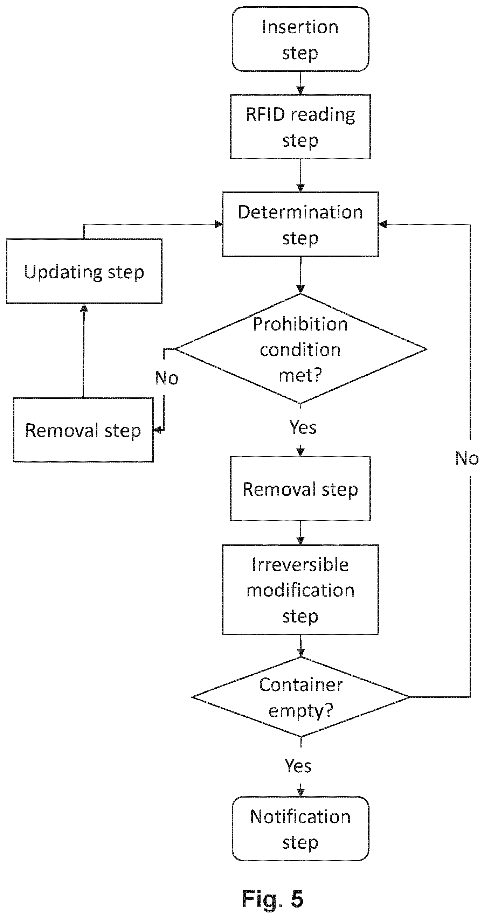

In Figure 5 a diagram of another example of a processing method for processing consumables 2 is shown wherein the processing method is performed by a processing system 1. The method begins with an insertion step, in which an operator puts a container 3 in which consumables 2 are arranged into the processing system 1.

Subsequent, in a RFID reading step, the processing system 1 reads the consumables status information from the RFID tag 4 and determines a filling-status of the consumables 2 in the container 3 based on the consumables status information.

In a determination step, the processing system 1 determines based on the consumables status information read from the RFID tag storage section, whether a predetermined prohibition condition is met after a removal of a part 2a of the consumables. Hereby, the processing system knows the current filling-status of the consumables 2 and the amount of the part 2a of the consumables 2 to be removed in a subsequent removal step.

In the subsequent removal step, the system removes the part 2a of the consumables 2 from the container 3.

In case the prohibition condition is not met, in an updating step, the processing system 1 updates the consumables status information on the RFID tag 4.

After the updating step, the processing system 1 continues with the determination whether the prohibition condition is met after a subsequent removal of another part 2a of the consumables 2 from the container 3 in another removal step.

In case the prohibition condition is met, in an irreversible modification step, the processing system 1 irreversibly modifies the RFID tag 4 such that from the RFID tag 4 it can be identified that the prohibition condition is met.

After the irreversible modification step, the processing system 1 determines whether the container 3 is empty or not. The processing system 1 knows from the information read from the RFID tag 4, whether there are several container sections 3a in the container 3.

In case there are several container sections 3a, and the prohibition condition was met for only one of the container sections 3a, wherein another container section 3a is still full, the processing system 1 continues with the determination whether another prohibition condition is met after a subsequent removal of another part 2a of the consumables 2 from the container 3 in another removal step.

When it is determined that the container is empty, in a notification step, the user is notified that the container 3 is empty and can be removed from the processing system 1.

The examples of Figures 4 and 5 are specific examples of a processing method, which do not exclude other examples with different method steps and/or sequences. For example, the notification step may be performed before or simultaneously to the irreversible modification step. Also, the updating step and/or the irreversible modification step may be performed before the actual removal step, in case a removal step has been initiated and is pending.

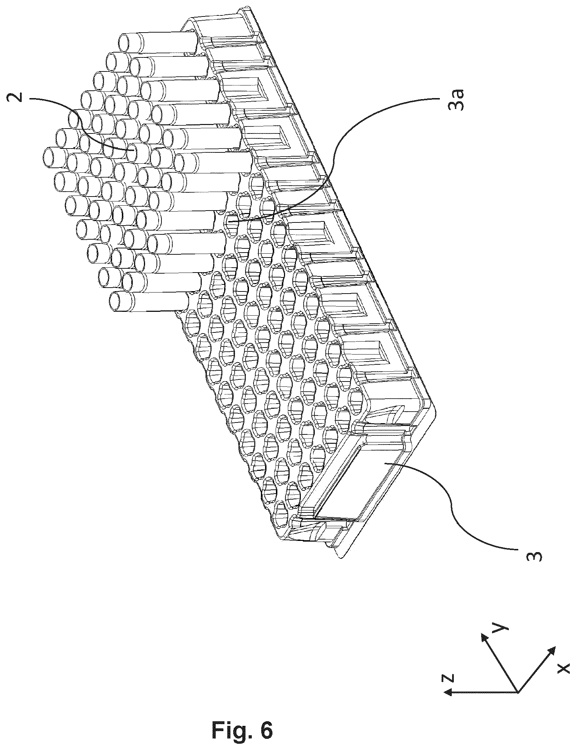

Figure 6 shows an example of a container 3 with consumables 2. The container 3 is a rack 3 and the consumables 2 are tubes 2, extending in z-direction from the rack 3. The rack 3 contains sixteen rows with seven slots per row, arranged in a matrix-pattern, wherein the rows of seven slots extend in x-direction. Each of the rows 3a forms one container section 3a of the rack 3. The rack 3 is only partially filled with consumables 2, such that the first nine rows 3a (viewed from a front of the rack 3 in y-direction) have reached an empty state. For each of these rows 3a, a prohibition can be defined within a processing system 1, wherein it can be defined that the respective prohibition condition is met when the respective row 3a has reached an empty state. One row 3a after the empty rows 3a (in y-direction) is partially filled and the remaining six rows 3a are completely filled, wherefore for these rows 3a the respective prohibition conditions are not met.

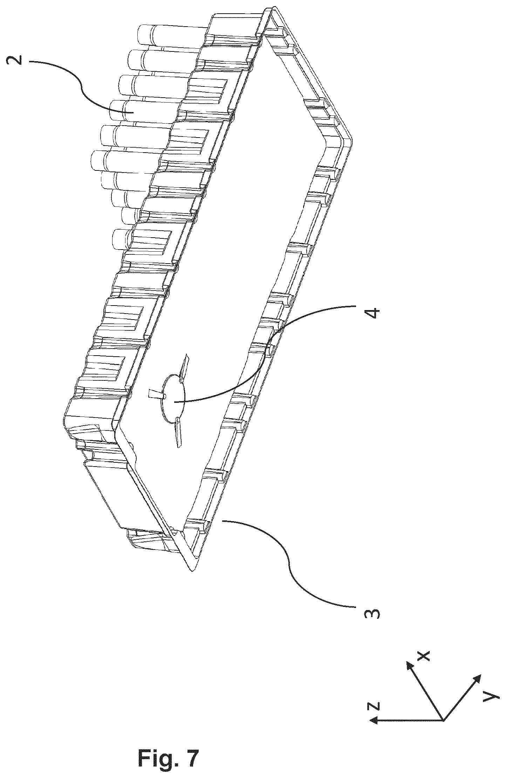

In Figure 7, the rack 3 of Figure 3 is shown from a bottom perspective (in z-direction). In other words, the bottom and two sides of the rack 3 are shown. To the bottom of the rack 3, a RFID tag 4 is attached by use of clips which are a part of the rack 3.

Alternative to a mechanical attachment via clips, the RFID tag may also be attached to the a container 3 by being glued on it, welded on it, or integrated into the container 3.

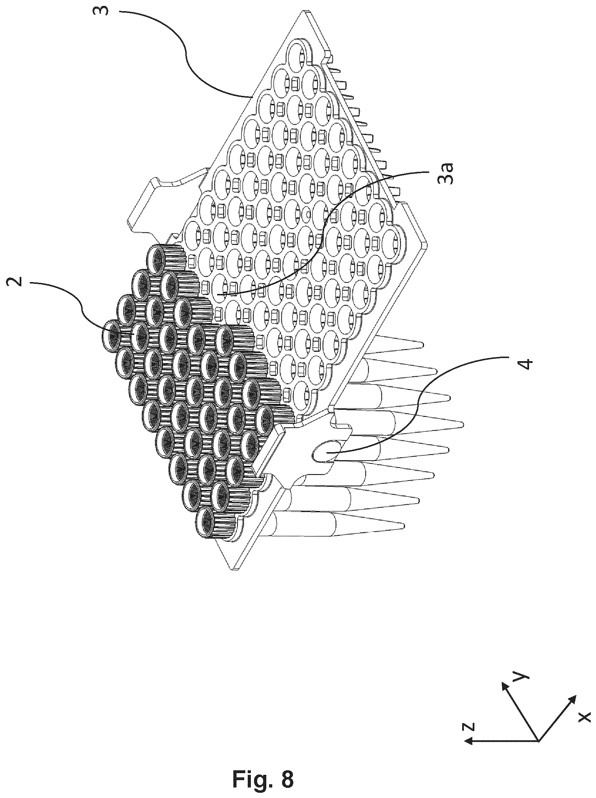

Figure 8 shows another example of a container 3 with consumables 2, extending in a z-direction from the container 3. The container 3 is a rack 3 and the consumables 2 a tips 2. The rack 3 contains twelve rows with eight slots per row, arranged in a matrix-pattern, wherein the rows of eight slots extend in y-direction. Each of the rows 3a forms one container section 3a of the rack 3. The rack 3 is only partially filled with tips 2, such that the first seven rows 3a (viewed from a front of the rack 3 in negative x-direction) have reached an empty state. For each of these rows 3a, a prohibition can be defined within a processing system 1, wherein it can be defined that the respective prohibition condition is met when the respective row 3a has reached an empty state. One row 3a after the empty rows 3a (in negative x-direction) is partially filled and the remaining four rows 3a are completely filled, wherefore for these rows 3a the respective prohibition conditions are not met. To the front side (in y-direction) of the rack 3, a RIFD tag 4 is attached to the rack 3.

### List of Reference Numerals

- 1: Processing system
- 2: Consumables
- 2a: Part of the consumables
- 3: Container
- 3a: Container section
- 4: RFID tag
- 5: RFID reading unit
- 7: RFID writing unit
- 9: Removal unit
- 9a: Pick-up arm
- 10: Automatic analyzing system
- 11: Input module
- 11a: Input module housing
- 11b: Input module access door
- 11c: Input module main body
- 13: Analyzing module
- 13a: Analyzing eqipment
- 14: Transport segment
- 15: Container placing section
- 17: Control panel
- 19: Samples
- 21: Processed consumables

## Claims

1. A processing system (1) for processing consumables (2), comprising:
a container (3) in which the consumables (2) are arranged, the container comprising an RFID tag (4) with at least one RFID tag storage section for storing consumables status information indicative of a filling-status of the consumables (2) arranged in the container;
an RFID reading unit (5) configured to read information from the RFID tag (4);
an RFID writing unit (7) configured to write information on the RFID tag (4); and
a removing unit (9) configured to remove a part (2a) of the consumables (2) from the container (3);
wherein the processing system (1) is configured to:
read, by means of the RFID reading unit (5), the consumables status information from the at least one RFID tag storage section,
remove, by means of the removing unit (9), a part (2a) of the consumables (2) from the container (3),
determine, based on the consumables status information read by the RFID reading unit (5), whether a predetermined prohibition condition is met after the removal of the part (2a) of the consumables (2) from the container (3) by the removing unit (9), and
in case the prohibition condition is not met, update, by means of the RFID writing unit (7), the consumables status information on the RFID tag (4), and
in case the prohibition condition is met, irreversibly modify the RFID tag (4) such that the processing system (1) is able to identify from the RFID tag (4) that the prohibition condition is met,
wherein the consumables status information is further indicative of a position of a part (2a) of the consumables (2) within the container (3) to be removed next, and wherein the processing system (1) is configured to remove the part (2a) of the consumables (2) from the position of the container (3) indicated in the consumables status information.

2. The processing system (1) according to claim 1, wherein the processing system (1) is further configured to provide a notification and/or to restrict the removal of consumables (2) from the container (3) if it is identified or determined that the prohibition condition is met.

3. The processing system (1) according to any of the preceding claims, wherein the processing system (1) is configured to irreversibly modify the RFID tag (4) by irreversibly modifying the at least one RFID tag storage section.

4. The processing system (1) according to any of the preceding claims, wherein the irreversibly modifying includes at least one of: deactivation, encryption, physical destruction, or permanent overwriting.

5. The processing system (1) according to any of the preceding claims, wherein information required for determining whether the prohibition condition is met is at least partially stored on the RFID tag (4).

6. The processing system (1) according to any of the preceding claims, wherein
the RFID tag (4) comprises a plurality of RFID tag storage sections, and
each of the plurality of RFID tag storage sections is configured to store consumables status information corresponding to container sections (3a) in which the consumables (2) are arranged, respectively.

7. The processing system (1) according to claim 6, wherein
a prohibition condition is defined for each of the container sections (3a), respectively,
the prohibition condition is defined as an empty state of the respective container section (3a),
a removal sequence is defined for the container sections (3a), and
the processing system (1) is configured to
perform the removal of consumables (2) from a next container section (3a) defined in the removal sequence when the RFID tag storage section corresponding to the previous container section (3a) has been irreversibly modified.

8. The processing system (1) according to any of the preceding claims,
wherein the consumables (2) are any of sample tubes, sample tube caps, pipetting tips and liquids, and/or
wherein the container (3) is any of a rack, a well plate and a bottle.

9. An automatic analyzing system (10) comprising:
at least one input module (11) comprising a processing system (1) according to any of the preceding claims, and
at least one analyzing module (13).

10. A processing method for processing consumables (2), the consumables (2) being arranged in a container (3), the container (3) comprising an RFID tag (4) with at least one RFID tag storage section for storing consumables status information indicative of a filling-status of the consumables (2) arranged in the container (3), wherein the processing method comprises:
an RFID reading step of reading the consumables status information from the at least one RFID tag storage section;
a removal step of removing a part (2a) of the consumables (2) from the container (3);
a determination step of determining, based on the consumables status information read from the RFID tag storage section, whether a predetermined prohibition condition is met after the removal step; and
in case the prohibition condition is not met, an updating step of updating the consumables status information on the RFID tag (4); and
in case the prohibition condition is met, an irreversible modification step of irreversibly modifying the RFID tag (4) such that from the RFID tag (4) it can be identified that the prohibition condition is met,
wherein the consumables status information is further indicative of a position of a part (2a) of the consumables (2) within the container (3) to be removed next, and wherein the part (2a) of the consumables (2) is removed from the position of the container (3) indicated in the consumables status information.

11. Use of an RFID tag (4) in a processing system (1) for processing consumables according to any of claims 1 to 8, wherein the RFID tag (4) comprises at least one RFID tag storage section for storing consumables status information, wherein the consumables status information is indicative of a position of a part (2a) of consumables (2) within the container (3) to be removed next and optionally indicative of a filling-status of consumables (2) arranged in the container (3).

## Patentansprüche

1. Verarbeitungssystem (1) zur Verarbeitung von Verbrauchsmaterialien (2), umfassend:
einen Behälter (3), in dem die Verbrauchsmaterialien (2) angeordnet sind, wobei der Behälter einen RFID-Tag (4) mit mindestens einem RFID-Tag-Speicherabschnitt zum Speichern von Verbrauchsmaterialstatusinformationen umfasst, die einen Füllstatus der im Behälter angeordneten Verbrauchsmaterialien (2) anzeigen;
eine RFID-Leseeinheit (5), die konfiguriert ist, um Informationen aus dem RFID-Tag (4) zu lesen;
eine RFID-Schreibeinheit (7), die konfiguriert ist, um Informationen auf den RFID-Tag (4) zu schreiben; und
eine Entnahmeeinheit (9), die konfiguriert ist, um einen Teil (2a) der Verbrauchsmaterialien (2) aus dem Behälter (3) zu entnehmen;
wobei das Verarbeitungssystem (1) konfiguriert ist, zum:
Lesen, mittels der RFID-Leseeinheit (5), der Verbrauchsmaterialienstatusinformationen aus dem zumindest einen RFID-Tag-Speicherabschnitt,
Entnehmen, mittels der Entnahmeeinheit (9), eines Teils (2a) der Verbrauchsmaterialien (2) aus dem Behälter (3),
Bestimmen, basierend auf den durch die RFID-Leseeinheit (5) gelesenen Verbrauchsmaterialienstatusinformationen, ob eine vorbestimmte Sperrbedingung erfüllt ist, nachdem der Teil (2a) des Verbrauchsmaterials (2) durch die Entnahmeeinheit (9) aus dem Behälter (3) entnommen wurde, und
falls die Sperrbedingung nicht erfüllt ist, mithilfe der RFID-Schreibeinheit (7) die Verbrauchsmaterialstatusinformationen auf dem RFID-Tag (4) zu aktualisieren, und
falls die Sperrbedingung erfüllt ist, den RFID-Tag (4) irreversibel verändern, so dass das Verarbeitungssystem (1) anhand des RFID-Tags (4) identifizieren kann, dass die Sperrbedingung erfüllt ist,
wobei die Verbrauchsmaterialstatusinformationen weiter eine Position eines Teils (2a) des Verbrauchsmaterials (2) innerhalb des Behälters (3) anzeigen, der als nächstes zu entnehmen ist, und wobei das Verarbeitungssystem (1) konfiguriert ist, um den Teil (2a) der Verbrauchsmaterialien (2) aus der in den Verbrauchsmaterialstatusinformationen angegebenen Position des Behälters (3) zu entnehmen.

2. Verarbeitungssystem (1) nach Anspruch 1, wobei das Verarbeitungssystem (1) weiter konfiguriert ist, eine Benachrichtigung bereitzustellen und/oder die Entnahme von Verbrauchsmaterialien (2) aus dem Behälter (3) zu beschränken, wenn festgestellt oder ermittelt wird, dass die Verbotsbedingung erfüllt ist.

3. Verarbeitungssystem (1) nach einem der vorstehenden Ansprüche, wobei das Verarbeitungssystem (1) konfiguriert ist, um den RFID-Tag (4) irreversibel zu verändern, indem es den mindestens einen RFID-Tag-Speicherabschnitt irreversibel ändert.

4. Verarbeitungssystem (1) nach einem der vorstehenden Ansprüche, wobei die irreversible Veränderung mindestens eines der folgenden Elemente einschließt: Deaktivierung, Verschlüsselung, physische Zerstörung oder dauerhafte Überschreibung.

5. Verarbeitungssystem (1) nach einem der vorstehenden Ansprüche, wobei Informationen, die zum Bestimmen erforderlich sind, ob die Sperrbedingung erfüllt ist, zumindest teilweise auf dem RFID-Tag (4) gespeichert sind.

6. Verarbeitungssystem (1) nach einem der vorstehenden Ansprüche, wobei
der RFID-Tag (4) mehrere RFID-Tag-Speicherabschnitte umfasst, und
jeder der mehreren RFID-Tag-Speicherabschnitte konfiguriert ist, um Verbrauchsmaterialstatusinformationen zu speichern, die den Behälterabschnitten (3a) entsprechen, in denen das Verbrauchsmaterial (2) jeweils angeordnet ist.

7. Verarbeitungssystem (1) nach Anspruch 6, wobei
eine Sperrbedingung für jeden Behälterabschnitt (3a) jeweils definiert ist,
die Sperrbedingung definiert ist als ein leerer Zustand des jeweiligen Behälterabschnitts (3a),
eine Entnahmeabfolge für den Behälterabschnitt (3a) definiert ist, und
wobei das Verarbeitungssystem (1) konfiguriert ist, um
Entnehmen der Verbrauchsmaterialien (2) aus einem nächsten Behälterabschnitt (3a), der in der Entnahmesequenz definiert ist, wenn der RFID-Tag-Speicherabschnitt, der dem vorherigen Behälterabschnitt (3a) entspricht, irreversibel verändert wurde.

8. Verarbeitungssystem (1) nach einem der vorstehenden Ansprüche,
wobei die Verbrauchsmaterialien (2) Probenröhrchen, Probenröhrchenverschlüsse, Pipettenspitzen und Flüssigkeiten sind, und/oder
wobei der Behälter (3) eines aus ein Gestell, eine Vertiefungsplatte und eine Flasche ist.

9. Automatisches Analysesystem (10) umfassend:
zumindest ein Eingangsmodul (11), das ein Verarbeitungssystem (1) nach einem der vorstehenden Ansprüche umfasst, und
zumindest ein Analysemodul (13).

10. Verarbeitungsverfahren zur Verarbeitung von Verbrauchsmaterialien (2), wobei die Verbrauchsmaterialien (2) in einem Behälter (3) angeordnet sind, wobei der Behälter (3) einen RFID-Tag (4) mit mindestens einem RFID-Etikett-Speicherabschnitt zum Speichern von Verbrauchsmaterialstatusinformationen umfasst, die einen Füllstatus der in dem Behälter (3) angeordneten Verbrauchsmaterialien (2) angeben, wobei das Verarbeitungsverfahren umfasst:
einen RFID-Leseschritt zum Lesen der Verbrauchsmaterialstatusinformationen aus dem mindestens einen RFID-Tag-Speicherabschnitt;
einen Entnahmeschritt zum Entnehmen eines Teils (2a) von Verbrauchsmaterialien (2) aus dem Behälter (3);
einen Bestimmungsschritt, bei dem basierend auf den aus dem RFID-Tag-Speicherabschnitt gelesenen Verbrauchsmaterialstatusinformationen bestimmt wird, ob nach dem Entnahme-Schritt eine vorbestimmte Sperrbedingung erfüllt ist; und
falls die Sperrbedingung nicht erfüllt ist, einen Aktualisierungsschritt zum Aktualisieren der Verbrauchsmaterialstatusinformationen auf dem RFID-Tag (4); und
falls die Sperrbedingung erfüllt ist, ein irreversibler Veränderungsschritt, bei dem der RFID-Tag (4) irreversibel verändert wird, so dass anhand des RFID-Tags (4) bestimmt werden kann, dass die Sperrbedingung erfüllt ist,
wobei die Verbrauchsmaterialstatusinformationen weiter eine Position eines Teils (2a) des Verbrauchsmaterials (2) innerhalb des Behälters (3) anzeigen, der als nächstes zu entnehmen ist, und wobei der Teil (2a) der Verbrauchsmaterialien (2) aus der in den Verbrauchsmaterialstatusinformationen angegebenen Position des Behälters (3) entnommen wird.

11. Verwendung eines RFID-Tags (4) in einem Verarbeitungssystem (1) zur Verarbeitung von Verbrauchsmaterialien nach einem der Ansprüche 1 bis 8, wobei der RFID-Tag (4) zumindest einen RFID-Tag-Speicherabschnitt zum Speichern von Verbrauchsmaterialstatusinformationen umfasst, wobei die Verbrauchsmaterialstatusinformationen eine Position eines Teils (2a) von Verbrauchsmaterialien (2) innerhalb des Behälters (3) anzeigen, der als nächstes entnommen werden soll, und optional einen Füllstand der in dem Behälter (3) angeordneten Verbrauchsmaterialien (2) anzeigen.

## Revendications

1. Système de traitement (1) de consommables (2), comprenant :
un contenant (3) dans lequel les consommables (2) sont agencés, le contenant comprenant une étiquette RFID (4) avec au moins une section de stockage d'étiquette RFID pour stocker des informations d'état de consommables indiquant un état de remplissage des consommables (2) agencés dans le contenant ;
une unité de lecture RFID (5) configurée pour lire des informations à partir de l'étiquette RFID (4) ;
une unité d'écriture RFID (7) configurée pour écrire des informations sur l'étiquette RFID (4) ; et
une unité de retrait (9) configurée pour retirer une partie (2a) des consommables (2) du contenant (3) ;
dans lequel le système de traitement (1) est configuré pour :
lire, au moyen de l'unité de lecture RFID (5), les informations d'état de consommables à partir de l'au moins une section de stockage d'étiquette RFID, retirer, au moyen de l'unité de retrait (9), une partie (2a) des consommables (2) du contenant (3),
déterminer, sur la base des informations d'état de consommables lues par l'unité de lecture RFID (5), si une condition d'interdiction prédéterminée est satisfaite après le retrait de la partie (2a) des consommables (2) du contenant (3) par l'unité de retrait (9), et
dans le cas où la condition d'interdiction n'est pas satisfaite, mettre à jour, au moyen de l'unité d'écriture RFID (7), les informations d'état de consommables sur l'étiquette RFID (4), et
dans le cas où la condition d'interdiction est satisfaite, modifier de manière irréversible l'étiquette RFID (4) de telle sorte que le système de traitement (1) puisse identifier à partir de l'étiquette RFID (4) que la condition d'interdiction est satisfaite,
dans lequel les informations d'état de consommables indiquent en outre une position d'une partie (2a) des consommables (2) à l'intérieur du contenant (3) à retirer ensuite, et dans lequel le système de traitement (1) est configuré pour retirer la partie (2a) des consommables (2) de la position du contenant (3) indiquée dans les informations d'état de consommables.

2. Système de traitement (1) selon la revendication 1, dans lequel le système de traitement (1) est en outre configuré pour fournir une notification et/ou pour empêcher le retrait de consommables (2) du contenant (3) s'il est identifié ou déterminé que la condition d'interdiction est satisfaite.

3. Système de traitement (1) selon l'une quelconque des revendications précédentes, dans lequel le système de traitement (1) est configuré pour modifier de manière irréversible l'étiquette RFID (4) par la modification irréversible de l'au moins une section de stockage d'étiquette RFID.

4. Système de traitement (1) selon l'une quelconque des revendications précédentes, dans lequel la modification irréversible inclut au moins l'un parmi : la désactivation, le chiffrement, la destruction physique, ou l'écrasement permanent.

5. Système de traitement (1) selon l'une quelconque des revendications précédentes, dans lequel des informations nécessaires pour déterminer si la condition d'interdiction est satisfaite sont au moins partiellement stockées sur l'étiquette RFID (4).

6. Système de traitement (1) selon l'une quelconque des revendications précédentes, dans lequel
l'étiquette RFID (4) comprend une pluralité de sections de stockage d'étiquette RFID, et
chacune de la pluralité de sections de stockage d'étiquette RFID est configurée pour stocker des informations d'état de consommables correspondant à des sections de contenant (3a) dans lesquelles les consommables (2) sont agencés, respectivement.

7. Système de traitement (1) selon la revendication 6, dans lequel
une condition d'interdiction est définie pour chacune des sections de contenant (3a), respectivement,
la condition d'interdiction est définie comme un état vide de la section de contenant respective (3a),
une séquence de retrait est définie pour les sections de contenant (3a), et
le système de traitement (1) est configuré pour
mettre en œuvre le retrait de consommables (2) d'une section de contenant suivante (3a) définie dans la séquence de retrait lorsque la section de stockage d'étiquette RFID correspondant à la section de contenant précédente (3a) a été modifiée de manière irréversible.

8. Système de traitement (1) selon l'une quelconque des revendications précédentes,
dans lequel les consommables (2) sont l'un quelconque parmi des tubes d'échantillon, des capuchons de tube d'échantillon, des pointes de pipetage et des liquides, et/ou dans lequel le contenant (3) est l'un quelconque parmi un plateau, une plaque à puits et un flacon.

9. Système d'analyse automatique (10) comprenant :
au moins un module d'entrée (11) comprenant un système de traitement (1) selon l'une quelconque des revendications précédentes, et
au moins un module d'analyse (13).

10. Procédé de traitement de consommables (2), les consommables (2) étant agencés dans un contenant (3), le contenant (3) comprenant une étiquette RFID (4) avec au moins une section de stockage d'étiquette RFID pour stocker des informations d'état de consommables indiquant un état de remplissage des consommables (2) agencés dans le contenant (3), dans lequel le procédé de traitement comprend :
une étape de lecture RFID consistant à lire les informations d'état de consommables à partir de l'au moins une section de stockage d'étiquette RFID ;
une étape de retrait consistant à retirer une partie (2a) des consommables (2) du contenant (3) ;
une étape de détermination consistant à déterminer, sur la base des informations d'état de consommables lues à partir de la section de stockage d'étiquette RFID, si une condition d'interdiction prédéterminée est satisfaite après l'étape de retrait ; et
dans le cas où la condition d'interdiction n'est pas satisfaite, une étape de mise à jour consistant à mettre à jour les informations d'état de consommables sur l'étiquette RFID (4) ; et
dans le cas où la condition d'interdiction est satisfaite, une étape de modification irréversible consistant à modifier de manière irréversible l'étiquette RFID (4) de telle sorte qu'à partir de l'étiquette RFID (4), il puisse être identifié que la condition d'interdiction est satisfaite,
dans lequel les informations d'état de consommables indiquent en outre une position d'une partie (2a) des consommables (2) à l'intérieur du contenant (3) à retirer ensuite, et dans lequel la partie (2a) des consommables (2) est retirée de la position du contenant (3) indiquée dans les informations d'état de consommables.

11. Utilisation d'une étiquette RFID (4) dans un système de traitement (1) de consommables selon l'une quelconque des revendications 1 à 8, dans laquelle l'étiquette RFID (4) comprend au moins une section de stockage d'étiquette RFID pour stocker des informations d'état de consommables,
dans laquelle les informations d'état de consommables indiquent une position d'une partie (2a) de consommables (2) à l'intérieur du contenant (3) à retirer ensuite et indiquent facultativement un état de remplissage de consommables (2) agencés dans le contenant (3).
